# EUROPEAN PATENT SPECIFICATION

(11) **EP 4 112 992 B1**
(45) Date of publication and mention of the grant of the patent: **29.01.2025**
(21) Application number: 21184576.3
(22) Date of filing: 08.07.2021
(51) Int. Cl.: F17C 3/02

(54) **TANK FOR STORING FLUID MEDIA UNDER CRYOGENIC CONDITIONS ON BORD OF A VEHICLE**
BEHÄLTER ZUR LAGERUNG VON FLÜSSIGEN MEDIEN UNTER KRYOGENEN BEDINGUNGEN AN BORD EINES FAHRZEUGS
RÉSERVOIR DE STOCKAGE DE MILIEUX FLUIDES DANS DES CONDITIONS CRYOGÉNIQUES À BORD D'UN VÉHICULE

(30) Priority: 30.06.2021 EP 21182736
(43) Date of publication of application: 04.01.2023
(73) Proprietor: Airbus Operations GmbH, 21129 Hamburg (DE)
(72) Inventor: Linde, Peter, 21129 Hamburg (DE); Müller, Markus, 21129 Hamburg (DE)
(74) Representative: Isarpatent

(56) References cited:
- JP-B2- 5 788 556
- US-A- 5 419 139
- US-A1- 2007 205 201
- US-A1- 2018 340 655
- US-A1- 2019 390 821
- US-B1- 11 015 761
- KOPP ALEXANDER ET AL: "The Aurora space launcher concept", CEAS SPACE JOURNAL, SPRINGER VIENNA, SPRINGER WIEN, AUSTRIA, vol. 10, no. 2, 30 November 2017 (2017-11-30), pages 167 - 187, XP036505083, ISSN: 1868-2502, [retrieved on 20171130], DOI: 10.1007/S12567-017-0184-2
- BECHEL V T ET AL: "Effect of stacking sequence on micro-cracking in a cryogenically cycled carbon/bismaleimide composite", COMPOSITES PART A, ELSEVIER, AMSTERDAM, NL, vol. 34, no. 7, 1 July 2003 (2003-07-01), pages 663 - 672, XP004428292, ISSN: 1359-835X, DOI: 10.1016/S1359-835X(03)00054-X
- HOHE JÖRG ET AL: "Performance of fiber reinforced materials under cryogenic conditions-A review", COMPOSITES PART A, ELSEVIER, AMSTERDAM, NL, vol. 141, 28 November 2020 (2020-11-28), XP086418971, ISSN: 1359-835X, [retrieved on 20201128], DOI: 10.1016/J.COMPOSITESA.2020.106226

## Description

The present invention pertains to a tank for storing fluid media under cryogenic conditions on bord of a vehicle. The invention particularly pertains to a tank for storing liquid hydrogen on an aircraft.

Hydrogen is of increasing interest as an energy storage medium due to its favorable gravimetric energy content. In a wide range of industrial applications, hydrogen is stored in pressure vessels. In particular in transportation, where space is scarce and the relatively low specific volumetric energy content of hydrogen is an issue, hydrogen is often stored as a highly compressed gas (so-called compressed hydrogen). The volumetric energy content can be further improved by storing the hydrogen in liquid form. However, part of the energy typically needs to be diverted to cooling the hydrogen so as to remain in liquid form. Due to the increasing requirements to move to zero emission transportation, this price is paid and the development goes in the direction of investigating liquid hydrogen storage forms.

Until recently, pressure vessels used for storing liquid hydrogen were usually made of metal due to the simplicity in manufacturing and the low permeation of the pressurized hydrogen. Since the dimensions of such tanks would have to be large and/or several such tanks would be required in typical aerospace applications, the total weight could become considerable when relying on metal. Hence, an interesting option could be to replace the metallic pressure vessel material with a fiber composite, e.g. CFRP (carbon-fiber-reinforced plastics).

CFRP materials are known to suffer from thermal stress-induced microcracking effects under cryogenic temperatures, which may contribute to the permeation of hydrogen through the material layers of the tank walls. This effect can be mitigated by integrating one or several inner liners, e.g. metallic (solid or sprayed) or polymeric. This then might however come at the expense of losing some of the weight benefits of a CFRP laminate and increasing the manufacturing complexity. The document US2019390821A1 discloses a high-pressure tank.

Against this background, it is an object of the present invention to find solutions for tanks suitable for cold media based on fiber composites with improved mechanical properties and reduced permeation.

This object is achieved by a fiber composite tank having the features of claim 1 and an aircraft having the features of claim 10.

According to an aspect of the invention, a tank for storing fluid media under cryogenic conditions, in particular liquid hydrogen, on bord of a vehicle, in particular an aircraft, has an outer wall formed at least in portions from a multi-layer fiber composite laminate, the laminate including at least one microcrack-stopping sub-laminate being surrounded by structural laminate layers in a thickness direction of the laminate, the crack-stopping sub-laminate having stacked alternating layers of thin fiber plies, each thin fiber ply having a thickness of less than 0.1 mm, wherein the fibers of a first thin fiber ply are oriented in a first area direction of the laminate and the fibers of a second thin fiber ply adjacent to the first thin fiber ply are oriented in a second area direction of the laminate, the second area direction being substantially perpendicular to the first area direction.

According to another aspect of the invention, an aircraft comprises a tank according to the invention.

Thus, one idea of the present invention is to utilize very thin plies (layers) in composite laminates, e.g. CFRP, to provide some significantly improved mechanical and other properties to a structural laminate of a fiber composite tank. These plies are not only lightweight and display good tensile properties, as the fibers tend to be more parallel in such thinner plies, which leads to better tightness. Moreover, and more importantly, cracking can be suppressed if several of such plies are stacked in a certain way. As a result, microcracking behavior can be delayed until higher up on the load curve, thereby inhibiting permeation. In order to obtain tightness against permeation, it is sufficient to have some limited sub-laminates or blocks of appropriately stacked thin plies within the composite laminate. For example, plies having the fibers arranged transverse to a load direction may be surrounded by plies with fibers arranged parallel to the load direction, the latter then exerting a restraining effect on the transverse plies in between them due to the small distances in case of a main load along the respective direction.

Over the last one and a half decades, industrial improvements have enabled several manufacturing processes to produce thin composite plies with thicknesses below 0.1 mm. In recent years, even plies with thickness of only 20 micrometers have been be manufactured industrially. The invention profits from these rather recent developments and utilizes thin plies for the composite shell of a storage tank for cold media, in particular liquid hydrogen, in order to save weight compared to current metallic shells. By suppressing cracks in the composite material, the invention is able to solve one important challenge in CFRP pressure vessels, since microcracking of the fiber layers could otherwise lead to the permeation of the hydrogen though the tank walls.

Advantageous embodiments and improvements of the present invention are found in the subordinate claims.

According to an embodiment of the invention, the thin fiber plies may have a thickness of less than 0.05 mm.

The strain at which micro cracking starts (cracking-onset) is for standard thermoset prepreg plies, for example, typically around 0.5 %. Standard plies have ply thicknesses down to 134 grams per square meters (gsm), which corresponds to roughly 0.130 mm thickness. Ply thicknesses of 100 gsm (appr. 0.100 mm) already display an increase of the strain at which micro cracking starts to roughly 1.0 %. Even thinner plies with a thickness of 0.050 mm display a strain at cracking onset of appr. 1.3 %, which is a significant improvement over the usually employed plies that have thicknesses above 0.1 mm.

According to an embodiment of the invention, the first area direction and the second area direction may be oriented along principle stress directions of the outer wall of the tank.

Consider, for example, a cylindrical pressure vessel, which displays two orthogonal principal stress directions, namely a circumferential direction along the curved cylinder wall and a straight axial direction along an axis of the cylinder. Thin plies having fibers oriented along the circumferential direction may now be alternated with thin plies having fibers oriented along the axial direction, that is, perpendicular to the fibers in the circumferential direction. By orienting the fiber in the thin plies along the principal stress directions and stacking these layers then at least in sub-laminates of the tank wall, micro cracking can be suppressed effectively. At the same time, the plies can serve as optimized structural plies. In this sense, it is justified to speak of multi-functional plies.

According to an embodiment of the invention, a ratio of the number of first thin fiber plies and the number of second thin fiber plies in at least a portion of the tank may correspond to a stress ratio of the principle stress directions in the respective portion of the tank.

The in-situ blocks or sub-laminates of the invention serve two purposes, namely to tighten against permeation and to take up their part of the total loads, i.e. take up structural stress. The rest of the laminate, may primarily be sized against loads and pressure. In the present embodiment, the stacking is such that the principal stress directions in the respective portion of the pressure vessel is kept optimally. In the instance of a cylindrical region, the circumferential stress to the longitudinal stress may have a ratio of 2:1, for example. It is hence beneficial if a corresponding ratio between the numbers of circumferential plies and longitudinal plies is followed, e.g. considered over the entire thickness of the laminate, including the in-situ blocks of thin plies.

According to an embodiment of the invention, the first area direction may be oriented substantially parallel to a load path along the outer wall of the tank and the second area direction may be oriented substantially perpendicular to the load path.

The laminate is thus designed such that in relation to the expected principal loads, the strains in the in-situ blocks of thin plies will remain such that micro cracking does not start.

According to an embodiment of the invention, the first area direction may be oriented substantially under -45° to a load path along the outer wall of the tank and the second area direction may be oriented substantially under +45° to the load path.

Hence, instead of orienting them along and perpendicular, respectively, with respect to principle load directions, it may also be beneficial, depending on the shape and further laminate structure of the tank wall, to orient them differently as long as they are kept substantially perpendicular in adjacent thin plies. +45°/-45° orientation may have benefits, for example, for optimum draping results in doubly curved regions, e.g. of spherically curved portions of the tank wall.

According to an embodiment of the invention, the laminate may follow a cylindrically curved portion of the tank. The first area direction may be oriented along an axial direction of the cylindrically curved portion and the second area direction may be oriented along a circumferential direction of the cylindrically curved portion.

In principle, the invention may not only be used to improve the properties of the main tank walls. In addition, the walls of tank outlet, inlets and/or pipes may be provided at least in portions with the sub-laminates of the invention in order to achieve improved properties.

According to an embodiment of the invention, the laminate may follow a spherically curved portion of the tank. The first area direction may be oriented along a first tangential direction of the spherically curved portion and the second area direction may be oriented along a second tangential direction of the spherically curved portion.

For example, a tank may have a cylindrical center portion, which is closed by two spherically curved end portions. Microcrack-stopping sub-laminates according to the invention may thus follow a cylindrical symmetry in the main portion and a spherical symmetry in the end caps. Outlet and/or inlet pipes of the tank may also have a cylindrical symmetry and thus the fiber composite laminate for this portions may be provided with correspondingly oriented thin plies.

According to an embodiment of the invention, the thin fiber plies may be made of spread tow fabric.

Spread tow fabric is one particular example for lightweight fabric that achieves very thin ply thicknesses. Its production involves the steps of spreading a tow in thin and flat unidirectional tape and weaving the tapes to a spread tow fabric. This technique amongst others increases the mechanical properties of the material and can also be used to reduce weight on composites. By arranging the fibers in the woven structure in the straightest orientation possible the fiber properties can be used in a highly effective way to carry load, both in tensile and compression. Spread tow fabric offers high versatility as it overcomes the limitations of traditional woven fabrics produced using tows. The flatness of flat tow fabric comes from near absence of crimp, which significantly reduces accumulation of matrix material at the interlacing points and thereby the dead weight of the final composite material.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a cross-sectional view of a tank for storing fluid media under cryogenic conditions according to an embodiment of the invention.
Fig. 2 schematically depicts a cross-sectional view of a fiber composite laminate forming an outer wall of the tank of Fig. 1.
Fig. 3 schematically depicts a perspective view of a cylindrically curved portion of the tank of Fig. 1.
Fig. 4 schematically depicts a perspective view of a spherically curved portion of the tank of Fig. 1.
Fig. 5 schematically depicts an aircraft equipped with the tank of Fig. 1.
Fig. 6 schematically depicts the tank of Fig. 1 during a manufacturing process.
Fig. 7 schematically depicts the tank of Fig. 1 during an alternative manufacturing process.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

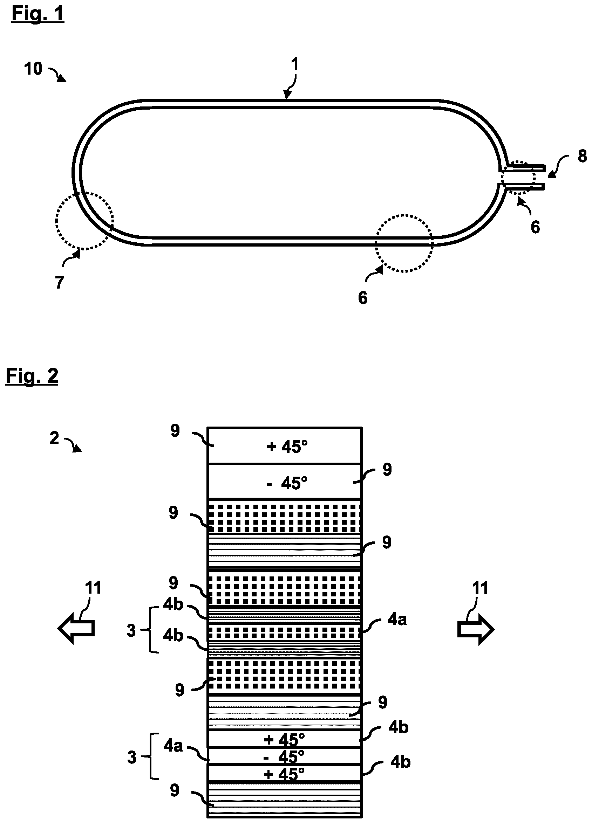

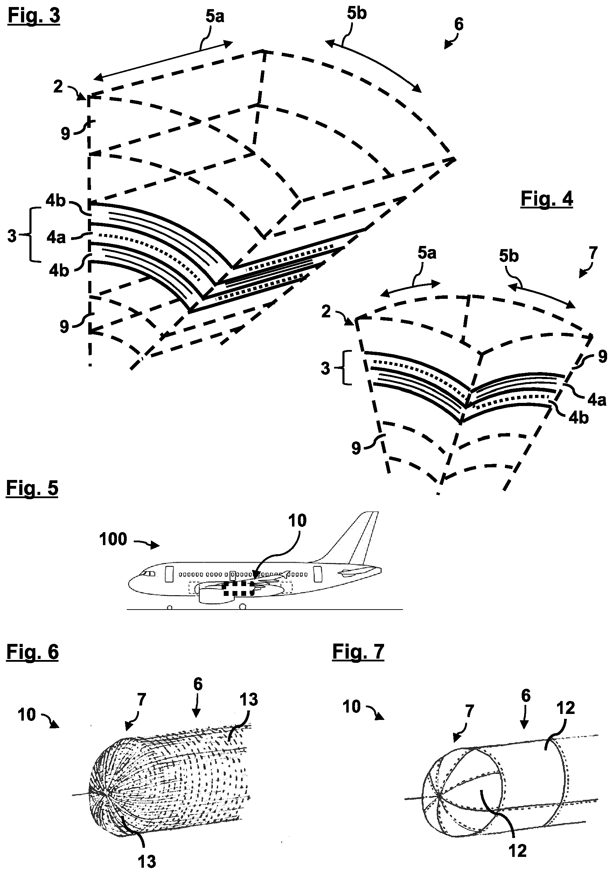

Figure 1 schematically depicts a cross-sectional view of a tank 10 for storing fluid media under cryogenic conditions according to an embodiment of the invention. The tank 10 may be one of several liquid hydrogen tanks provided on a passenger aircraft 100, as the one exemplarily shown in Fig. 5. The tank 10 may have a cylindrically curved portion 6 in the center, which is closed off by two spherically curved portions 7. A tank outlet 8 is provided in one of the end portions, which also has cylindrically formed outer walls.

The complete outer wall 1 of the tank 10 is formed from a multi-layer fiber composite laminate 2 as schematically indicated in Figs. 2 to 4. Fig. 2 exemplifies the general basic structure of the laminate 2, while Figs. 3 and 4 show detailed views of a cylindrically curved portion 6 (e.g. the center part of the tank 10 and/or the outlet 8) and a spherically curved portion 7 (e.g. the end portions of the tank 10).

The laminate 2 includes at least one microcrack-stopping sub-laminate 3 being surrounded by structural laminate layers 9 in a thickness direction of the laminate 2. In the example of Fig. 2, two such "in-situ" crack stopping sub-laminates 3 are provided within the laminate 2.

Each crack-stopping sub-laminate 3 has stacked alternating layers of thin fiber plies 4a, 4b. Each thin fiber ply 4a, 4b is made of spread tow fabric and has a thickness of less than 0.1 mm, in particular less than 0.05 mm. The fibers of a first thin fiber ply 4a are oriented in a first area direction 5a of the laminate 2 and the fibers of a second thin fiber ply 4b adjacent to the first thin fiber ply 4a are oriented in a second area direction 5b of the laminate 2, the second area direction 5b being substantially perpendicular to the first area direction 5a. Due to practical manufacturing reasons, the fibers may not be perfectly aligned but may be oriented with a more or less spread out distribution, e.g. +/- 10°.

Fig. 2 exemplarily shows two crack-stopping sub-laminates 3, each having three alternating thin fiber plies 4a, 4b. In case of the upper crack-stopping sub-laminate 3 of the two sub-laminates 3 in Fig. 2, a first thin fiber ply 4a has its fibers oriented substantially perpendicular to a load path 11 along the outer wall 1 of the tank 10 and is surrounded by two second thin fiber plies 4b having their fibers oriented substantially parallel to the load path 11. In case of the lower crack-stopping sub-laminate 3 of the two sub-laminates 3 in Fig. 2, a first thin fiber ply 4a has its fibers oriented substantially under -45° to a load path 11 along the outer wall 1 of the tank 10 and is surrounded by two second thin fiber plies 4b having their fibers oriented substantially under 45° to the load path 11.

The two crack-stopping sub-laminates 3 are separated by several structural layers 9 from each other and from the outer surfaces of the laminate 2. The structural layers 9 may have significant larger thicknesses than the thin plies 4a, 4b, e.g. thicknesses larger than 0.1 mm. The laminate 2 may have further layers, which are not shown in Fig. 2. Overall, there may be 20 to 30 or more layers/plies stacked on top of each other within the laminate 2 resulting in a laminate thickness of several millimeters.

As exemplarily shown in Fig. 2, the structural layers 9 may also have their fibers oriented in various directions, e.g. parallel to the load path 11, perpendicular to the load path 11 and/or under ±45° relative to the load path 11. For example, outermost plies towards the laminate surfaces may have ±45° due to shear stability and robustness reasons (against impact and damages, cf. uppermost layers in Fig. 2).

For simplicity, only two in-situ-blocks of crack-stopping sub-laminates 3 are shown within the laminate 2, which are separated by several structural layers 9. It is however possible in other embodiments to provide only one or more than two such sub-laminates 3, potentially also in sequence (in one instance they could by stacked as 0°/90° etc., or close to that, and in another instance they could be stacked as +45°/-45° etc.).

The sub-laminates 3 serve two purposes, namely to tighten against permeation and to take up their part of the total loads, i.e. take up structural stress. For example, the parallelly arranged second thin fiber plies 4b surround the perpendicularly arranged first thin fiber ply 4a in the upper sub-laminate 3 of Fig. 2 and thereby have a restraining effect on the ply 4a in between them in case of main loads along the load path 11. Consequently, microcracks only start developing at much higher loads.

The rest of the laminate 2 primarily is sized against loads and pressure. The stacking for all layers/plies can be chosen such that the principal stress directions in the tank wall 1 are kept optimally. For the example of a thin-walled cylindrical pressure vessel with radius r, wall thickness t and inner pressure ΔP, the tangential stress can be approximated as σₜ = ΔP r / t. The longitudinal stress can be approximated as σₗ = σₜ / 2. Hence, a factor of 2 is to be applied for the stress ratio of the principle stress directions in this example.

This is exemplified in Figs. 3 and 4. In Fig. 3, the laminate 2 follows a cylindrically curved portion of the tank 10, wherein the first area direction 5a is oriented along an axial direction of the cylindrically curved portion 6 and the second area direction 5b is oriented along a circumferential direction of the cylindrically curved portion 6. In Fig. 4, the laminate 2 follows a spherically curved portion 7 of the tank 10, wherein the first area direction 5a is oriented along a first tangential direction of the spherically curved portion 7 and the second area direction 5b is oriented along a second tangential direction of the spherically curved portion 7.

In the cylindrically curved portion 6 of Fig. 3, the circumferential stress to the longitudinal stress has the ratio of 2:1 and hence a corresponding ratio between the numbers of circumferential plies and axial plies is chosen, considered over the entire laminate, including the sub-laminates 3. This is illustrated in Fig. 3, which shows two of the thin fiber plies 4b oriented in the circumferential direction (second area direction 5b) and one thin fiber ply 4a oriented in the axial direction (first area direction 5a).

In the spherically curved portion 7 of Fig. 4, the circumferential stress to the longitudinal stress has the ratio of 1:1 and hence a corresponding ratio between the numbers of plies is chosen, considered over the entire laminate, including the sub-laminates 3. This is illustrated in Fig. 4, which shows one thin fiber ply 4a, 4b in each orientation.

As to the manufacturing of CFRP tanks, different processes can be used. Fig. 6 shows a part of a tank that is manufactured using a tape laying process, wherein laminate tapes 13 are laid down by a robotic arm (circumferentially in the cylindrically curved portion 6 and radially in the spherically curved portion 7).

In contrast to Fig. 6, in which the in-situ block layers may be manufactured on-line with the whole laminate 2, Fig. 7 shows an example where off-line prepared sub-laminates 3 are applied in segments 12 to be integrated in the total laminate 2. The benefit of these segments 12 is that different semi-finished materials may be draped over the curved surfaces, e.g. braided thin plies, fabrics of thin plies, etc.

The tank 10 may be built up totally of CFRP or another fiber composite material including pipe connections, inlets, outlets etc. However, also hybrid vessels are possible, e.g. with a cylindrical part made of CFRP and end domes made of metal (with pipe connections). In such cases, the advantage of the sub-laminates 3 made of thin fiber plies 4a, 4b remains for the cylindrical part.

As a result, the invention has various benefits over the prior art comprising amongst others:
- enabling CFRP laminates for cryogenic tank walls without micro cracking up to efficient stress levels by using thin fiber plies in sub-laminates as crack-stopping barriers,
- lower density than aluminum possible, i.e. weight reduction,
- stress optimization according to principal stress direction,
- composite material not fatigue sensitive, as opposed to e.g. monolithic metallic cross-sections, in which cracks can hardly be stopped,
- high parallelity of fibers of the thin plies contributes to smooth surface and exact tolerances, simplifies cleaning of the tank, reducing (or potentially omitting) the need for an inner metallic liner and the corresponding problems with regards to material incompatibility,
- sub-laminate layers can be manufactured on-line or off-line for maximum manufacturing flexibility and lead time reduction,
- thin fiber plies can be provided semi-finished, e.g. as a pre-preg or as a dry-fiber product.

In the foregoing detailed description, various features are grouped together in one or more examples or examples with the purpose of streamlining the disclosure. It is to be understood that the above description is intended to be illustrative, and not restrictive. It is intended to cover all alternatives and modifications falling under the scope of the appended claims.

Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: outer wall
- 2: multi-layer fiber composite laminate
- 3: microcrack-stopping sub-laminate
- 4a, 4b: thin fiber ply
- 5a, 5b: area direction
- 6: cylindrically curved portion
- 7: spherically curved portion
- 8: tank outlet
- 9: structural laminate layer
- 10: tank
- 11: load path
- 12: tank segment
- 13: laminate tape
- 100: aircraft

## Claims

1. Tank (10) for storing fluid media under cryogenic conditions, in particular liquid hydrogen, on bord of a vehicle, in particular an aircraft (100), the tank (10) having an outer wall (1) formed at least in portions from a multi-layer fiber composite laminate (2), the laminate (2) including at least one microcrack-stopping sub-laminate (3) being surrounded by structural laminate layers (9) in a thickness direction of the laminate (2), the crack-stopping sub-laminate (3) having stacked alternating layers of thin fiber plies (4a, 4b), each thin fiber ply (4a, 4b) having a thickness of less than 0.1 mm, wherein the fibers of a first thin fiber ply (4a) are oriented in a first area direction (5a) of the laminate (2) and the fibers of a second thin fiber ply (4b) adjacent to the first thin fiber ply (4a) are oriented in a second area direction (5b) of the laminate (2), the second area direction (5b) being substantially perpendicular to the first area direction (5a).

2. Tank (10) according to claim 1, wherein the thin fiber plies (4a, 4b) have a thickness of less than 0.05 mm.

3. Tank (10) according to claim 1 or 2, wherein the first area direction (5a) and the second area direction (5b) are oriented along principle stress directions of the outer wall (1) of the tank (10).

4. Tank (10) according to claim 3, wherein a ratio of the number of first thin fiber plies (4a) and the number of second thin fiber plies (4b) in at least a portion of the tank (10) corresponds to a stress ratio of the principle stress directions in the respective portion of the tank (10).

5. Tank (10) according to one of the claims 1 to 4, wherein the first area direction (5a) is oriented substantially parallel to a load path (11) along the outer wall (1) of the tank (10) and the second area direction (5b) is oriented substantially perpendicular to the load path (11).

6. Tank (10) according to one of the claims 1 to 4, wherein the first area direction (5a) is oriented substantially under -45° to a load path (11) along the outer wall (1) of the tank (10) and the second area direction (5b) is oriented substantially under +45° to the load path (11).

7. Tank (10) according to one of the claims 1 to 6, wherein the laminate (2) follows a cylindrically curved portion of the tank (10), wherein the first area direction (5a) is oriented along an axial direction of the cylindrically curved portion (6) and the second area direction (5b) is oriented along a circumferential direction of the cylindrically curved portion (6).

8. Tank (10) according to one of the claims 1 to 6, wherein the laminate (2) follows a spherically curved portion (7) of the tank (10), wherein the first area direction (5a) is oriented along a first tangential direction of the spherically curved portion (7) and the second area direction (5b) is oriented along a second tangential direction of the spherically curved portion (7).

9. Tank (10) according to one of the claims 1 to 8, wherein the thin fiber plies (4a, 4b) are made of spread tow fabric.

10. Aircraft (100) equipped with a tank (10) according to one of the claims 1 to 9.

## Patentansprüche

1. Tank (10) zur Lagerung von fluiden Medien unter kryogenen Bedingungen, insbesondere flüssigem Wasserstoff, an Bord eines Fahrzeugs, insbesondere eines Luftfahrzeugs (100), wobei der Tank (10) eine Außenwand (1) aufweist, die zumindest abschnittsweise aus einem mehrschichtigen Faserverbundlaminat (2) gebildet ist, wobei das Laminat (2) mindestens ein mikrorissstoppendes Teillaminat (3) umfasst, das in einer Dickenrichtung des Laminats (2) von Strukturlaminatschichten (9) umgeben ist, wobei das rissstoppende Teillaminat (3) gestapelte abwechselnde Schichten aus dünnen Faserlagen (4a, 4b) umfasst, wobei jede dünne Faserlage (4a, 4b) eine Dicke von weniger als 0,1 mm aufweist, wobei die Fasern einer ersten dünnen Faserlage (4a) in einer ersten Flächenrichtung (5a) des Laminats (2) ausgerichtet sind und die Fasern einer zweiten dünnen Faserlage (4b) angrenzend an die erste dünne Faserlage (4a) in einer zweiten Flächenrichtung (5b) des Laminats (2) ausgerichtet sind, wobei die zweite Flächenrichtung (5b) im Wesentlichen senkrecht zu der ersten Flächenrichtung (5a) ist.

2. Tank (10) nach Anspruch 1, wobei die dünnen Faserlagen (4a, 4b) eine Dicke von weniger als 0,05 mm aufweisen.

3. Tank (10) nach Anspruch 1 oder 2, wobei die erste Flächenrichtung (5a) und die zweite Flächenrichtung (5b) entlang von Hauptspannungsrichtungen der Außenwand (1) des Tanks (10) ausgerichtet sind.

4. Tank (10) nach Anspruch 3, wobei ein Verhältnis der Anzahl an ersten dünnen Faserlagen (4a) und der Anzahl an zweiten dünnen Faserlagen (4b) in zumindest einem Abschnitt des Tanks (10) einem Spannungsverhältnis der Hauptspannungsrichtungen in dem jeweiligen Abschnitt des Tanks (10) entspricht.

5. Tank (10) nach einem der Ansprüche 1 bis 4, wobei die erste Flächenrichtung (5a) im Wesentlichen parallel zu einem Belastungspfad (11) entlang der Außenwand (1) des Tanks (10) ausgerichtet ist und die zweite Flächenrichtung (5b) im Wesentlichen senkrecht zu dem Belastungspfad (11) ausgerichtet ist.

6. Tank (10) nach einem der Ansprüche 1 bis 4, wobei die erste Flächenrichtung (5a) im Wesentlichen unter - 45° zu einem Belastungspfad (11) entlang der Außenwand (1) des Tanks (10) ausgerichtet ist und die zweite Flächenrichtung (5b) im Wesentlichen unter +45° zu dem Belastungspfad (11) ausgerichtet ist.

7. Tank (10) nach einem der Ansprüche 1 bis 6, wobei das Laminat (2) einem zylindrisch gekrümmten Abschnitt des Tanks (10) folgt, wobei die erste Flächenrichtung (5a) entlang einer axialen Richtung des zylindrisch gekrümmten Abschnitts (6) ausgerichtet ist und die zweite Flächenrichtung (5b) entlang einer Umfangsrichtung des zylindrisch gekrümmten Abschnitts (6) ausgerichtet ist.

8. Tank (10) nach einem der Ansprüche 1 bis 6, wobei das Laminat (2) einem sphärisch gekrümmten Abschnitt (7) des Tanks (10) folgt, wobei die erste Flächenrichtung (5a) entlang einer ersten Tangentialrichtung des sphärisch gekrümmten Abschnitts (7) ausgerichtet ist und die zweite Flächenrichtung (5b) entlang einer zweiten Tangentialrichtung des sphärisch gekrümmten Abschnitts (7) ausgerichtet ist.

9. Tank (10) nach einem der Ansprüche 1 bis 8, wobei die dünnen Faserlagen (4a, 4b) aus Spread-Tow-Gewebe bestehen.

10. Luftfahrzeug (100), das mit einem Tank (10) nach einem der Ansprüche 1 bis 9 ausgestattet ist.

## Revendications

1. Réservoir (10) de stockage de milieux fluides dans des conditions cryogéniques, en particulier de l'hydrogène liquide, à bord d'un véhicule, en particulier un aéronef (100), le réservoir (10) ayant une paroi externe (1) formée au moins en parties d'un stratifié composite de fibres multicouche (2), le stratifié (2) incluant au moins un sous-stratifié bloquant les microfissures (3) étant entouré de couches de stratifié structurelles (9) dans une direction d'épaisseur du stratifié (2), le sous-stratifié bloquant les microfissures (3) ayant des couches en alternance empilées de plis de fibres minces (4a, 4b), chaque pli de fibres mince (4a, 4b) ayant une épaisseur inférieure à 0,1 mm, dans lequel les fibres d'un premier pli de fibres mince (4a) sont orientées dans une première direction de zone (5a) du stratifié (2) et les fibres d'un second pli de fibres mince (4b) adjacent au premier pli de fibres mince (4a) sont orientées dans une seconde direction de zone (5b) du stratifié (2), la seconde direction de zone (5b) étant sensiblement perpendiculaire à la première direction de zone (5a).

2. Réservoir (10) selon la revendication 1, dans lequel les plis de fibres minces (4a, 4b) ont une épaisseur inférieure à 0,05 mm.

3. Réservoir (10) selon la revendication 1 ou 2, dans lequel la première direction de zone (5a) et la seconde direction de zone (5b) sont orientées le long de directions de contrainte de principe de la paroi externe (1) du réservoir (10).

4. Réservoir (10) selon la revendication 3, dans lequel un rapport du nombre de premiers plis de fibres minces (4a) et du nombre de seconds plis de fibres minces (4b) dans au moins une partie du réservoir (10) correspond à un rapport de contrainte des directions de contrainte de principe dans la partie respective du réservoir (10).

5. Réservoir (10) selon l'une des revendications 1 à 4, dans lequel la première direction de zone (5a) est orientée sensiblement parallèlement à un trajet de charge (11) le long de la paroi externe (1) du réservoir (10) et la seconde direction de zone (5b) est orientée sensiblement perpendiculairement au trajet de charge (11).

6. Réservoir (10) selon l'une des revendications 1 à 4, dans lequel la première direction de zone (5a) est orientée sensiblement sous -45° par rapport à un trajet de charge (11) le long de la paroi externe (1) du réservoir (10) et la seconde direction de zone (5b) est orientée sensiblement sous +45° par rapport au trajet de charge (11).

7. Réservoir (10) selon l'une des revendications 1 à 6, dans lequel le stratifié (2) suit une partie incurvée de manière cylindrique du réservoir (10), dans lequel la première direction de zone (5a) est orientée le long d'une direction axiale de la partie incurvée de manière cylindrique (6) et la seconde direction de zone (5b) est orientée le long d'une direction circonférentielle de la partie incurvée de manière cylindrique (6).

8. Réservoir (10) selon l'une des revendications 1 à 6, dans lequel le stratifié (2) suit une partie incurvée de manière sphérique (7) du réservoir (10), dans lequel la première direction de zone (5a) est orientée le long d'une première direction tangentielle de la partie incurvée de manière sphérique (7) et la seconde direction de zone (5b) est orientée le long d'une seconde direction tangentielle de la partie incurvée de manière sphérique (7).

9. Réservoir (10) selon l'une des revendications 1 à 8, dans lequel les plis de fibres minces (4a, 4b) sont constitués de tissu d'étoupe étalé.

10. Aéronef (100) équipé d'un réservoir (10) selon l'une des revendications 1 à 9.
